# EUROPEAN PATENT SPECIFICATION

(11) **EP 1 790 555 B1**
(45) Date of publication and mention of the grant of the patent: **06.11.2013**
(21) Application number: 06119476.7
(22) Date of filing: 24.08.2006
(51) Int. Cl.: B62D 59/02, B60P 3/36

(54) **Arrangement and method for manoeuvring an uncoupled trailer**
Vorrichtung und Verfahren zum Rangieren eines abgekoppelten Anhängers
Dispositif et procédé pour manoeuvrer une remorque découplée

(30) Priority: 25.08.2005 NL 1029805
(43) Date of publication of application: 30.05.2007
(73) Proprietor: Reich KG, 35713 Eschenburg-Wissenbach (DE); Reich Benelux Office, 6825 MS Arnhem (NL)
(72) Inventor: Bender, Steffen, 25713 Eschenburg (DE)
(74) Representative: Nederlandsch Octrooibureau

(56) References cited:
- EP-A- 0 827 898
- EP-A- 1 225 090

## Description

The invention relates to an arrangement for manoeuvring a trailer with two wheels on either side, which arrangement comprises a first and a second drive unit which can be mounted on the trailer and which are arranged to drive consistently one wheel on consistently one side of the trailer, the arrangement including a control unit which is arranged to control the first and the second drive unit.

An arrangement of this type is generally known in the prior art. The manoeuvring of relatively heavy trailers, in particular, when these have been uncoupled from a tractor unit involves the use of constructions wherein rollers are pressed against the tyres of the wheels and then driven in rotation. The drive units are activated by the control unit and the control system can be operated by a user. An uncoupled trailer can in this way easily be manoeuvred by a user.

Trailers with two wheels on either side, also called tandem axle trailers, are more difficult to manoeuvre than trailers having just two wheels. In the case of a tandem axle trailer, the two axles are located close to each other and are positioned roughly centrally underneath the trailer. None of the wheels is steerable, so when making a sharp turn a certain mechanical tension (torsion) can be produced in the tyres of the wheels.

Patent publication GB 2 371 278 A describes a manoeuvring apparatus which drives two (or four) wheels of a tandem axle trailer. The manoeuvring apparatus is capable of performing, on a user's command, just one sharp turn at a time. Automatically making multiple turns is not possible.

When making the sharp turn the drive units are activated in such a way as to give the wheel concerned a slight push. This can be done by activating and then suddenly stopping the drive units but also by suddenly changing speed. This method shakes the caravan, as it were. The shaking allows the tension that has built up in the tyres to be released. However, this tension can be so great that through the release of the tension the caravan assumes a rotating, oscillating movement in the horizontal plane. This can have unpleasant consequences, certainly in the case of a caravan. Firstly, the oscillation can cause undesirable shifting of items in the caravan (think of cups and plates, which may fall on the floor). In addition, the oscillation will eventually weaken the chassis of the caravan, thus reducing the lifetime of the caravan.

One aim of the present invention is to provide an arrangement for manoeuvring a trailer with two wheels on either side, wherein the trailer can automatically make multiple turns in succession and wherein during manoeuvring the risk of oscillation of the trailer is low.

In the case of an arrangement described above, this aim is achieved in that the control unit is arranged for controlling the drive units in such a way that the trailer makes a forward/backward turn, automatically followed by a backward/forward turn, the power (P) of the first drive unit being described by a first power curve and the power of the second drive unit by a second power curve, each power curve intersecting a time axis at least once, which intersection denotes a change in driving direction of the drive units concerned, and both power curves having a positive and a negative value alternating over time. In this case the power curve is defined in such a way that this has a positive value if the drive unit pushes the wheel concerned in a first direction (for example, forwards) and a negative value if the drive unit pushes the wheel concerned in an opposite direction (backwards).

The trailer makes a turn, for example, firstly forwards to the right, after which it makes a backward turn to the left. The term "forwards" is defined in this regard as being in the direction of the drawbar wheel. The manoeuvring movements are repeated until the trailer is located in a direction desired by the user. The result of the manoeuvring movements is a rotation of the trailer in a relatively small area.

As a result of the specific power curves of the two drive units, the trailer rotates during the consecutive turns in the same direction in each case and the risk that torsion in the tyres causes the trailer to rotate in the other direction at the point when the movement is reversed is low.

In one embodiment, after a start-up period and before a stop period, the first power curve continually has a greater value than that of the second power curve. As a result of the fact that the first power curve continually has a greater value than that of the second power curve, a continuous moment is exerted on the trailer. As a result of this, there is even less opportunity for the torsion in the tyres to relax during manoeuvring because there is a specific moment on the trailer at all times. This moment is present even at the point when the trailer changes its lateral direction. The elastic deformation (i.e. the torsion) will therefore not have the opportunity to relax in this case too. Because the torsion in the tyres does not have the opportunity to relax, the speed of rotation of the trailer does not change sign, in other words the trailer will not start to oscillate.

In one embodiment the first and the second power curve vary between the values P_max and P_min, wherein P_max > 0 and P_min < 0 and |P_max|>|P_min|.

The second power curve at the point when the first power curve passes through zero preferably has as an absolute minimum of 10 % of the maximum value of the power curves. This minimum difference is necessary in order to prevent the torsion in the tyres from having the opportunity to relax after all during reversal of the direction of the trailer. Shaking of the trailer is thus prevented.

In one embodiment the first power curve moves in a first period p1 from 0 to the value P_max, remains in a second period p2 at the value P_max, moves in a third period p3 from the value P_max to a value P_min and remains in a fourth period p4 at the value P_min. This shape of the power curve is easy to produce using software. For example, the ratio |P_max| |/| |P_min| is in this case 5.

In one embodiment, after a start-up period and before a stop period, the second power curve remains at a constant value below the first power curve. As a result of this, a continuous moment is applied on the trailer. This ensures gradual rotation of the trailer.

The invention further relates to a trailer provided with an arrangement as described above. In addition, the invention relates to a method for manoeuvring a trailer according to Claim 9. The invention also relates to a computer program according to Claim 13.

Further advantages and characteristics of the present invention will become clear from a description of a few illustrative embodiments, wherein reference will be made to the appended drawings, in which:
Fig. 1 is a diagrammatic side view of a caravan provided with the manoeuvring arrangement according to the invention;
Fig. 2 is a diagrammatic plan view of the caravan performing a first manoeuvring movement;
Fig. 3 is a diagrammatic plan view of the caravan performing a second manoeuvring movement;
Fig. 4 is a diagrammatic plan view of the caravan performing a third manoeuvring movement;
Fig. 5 shows a possible trajectory covered by the caravan during the movements of Figures 2 - 4;
Fig. 6 shows an alternative trajectory that the caravan can cover;
Fig. 7 is a diagrammatic representation of the control unit according to one embodiment;
Fig. 8 shows a first embodiment of the power curves;
Fig. 9 shows a second embodiment of the power curves; and
Fig. 10 is a graph showing a possible curve for the rotational speed of the caravan.

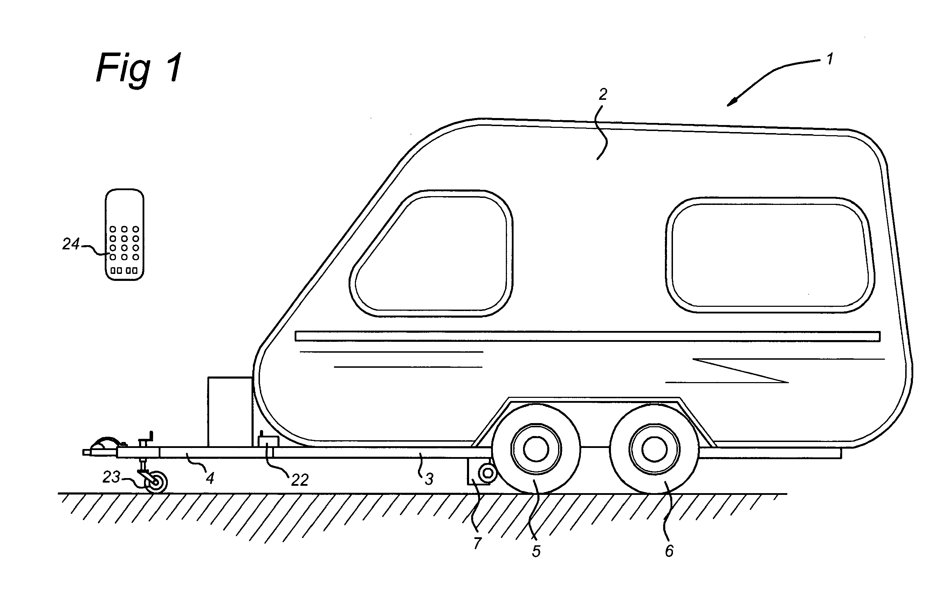

In Figure 1 a caravan according to one embodiment of the invention is indicated by 1. It will be understood that the present invention is also applicable to many other types of trailers, such as horse trailers. The caravan 1 is provided with a superstructure 2 and a chassis 3. At the front, the chassis 3 merges into a drawbar 4 on which a nose wheel 23 is fitted. The caravan shown here is a tandem axle trailer and is provided with wheels 8 and 9 located close to each other. On the caravan 1 an arrangement for manoeuvring is fitted consisting of, *inter alia,* a first and a second drive unit which are arranged to drive consistently one wheel on consistently one side of the trailer. A drive unit which presses against and is able to drive wheel 8 is indicated by 10. There is such a drive unit on both sides of the caravan 1 and activation of this drive unit is controlled by a common control unit 22. The control unit 22 is arranged for receiving radio-frequency signals that are sent by a remote control 24. According to the invention the control unit 22 is arranged for activating the drive units in such a way that at least two turns are made in immediate succession.

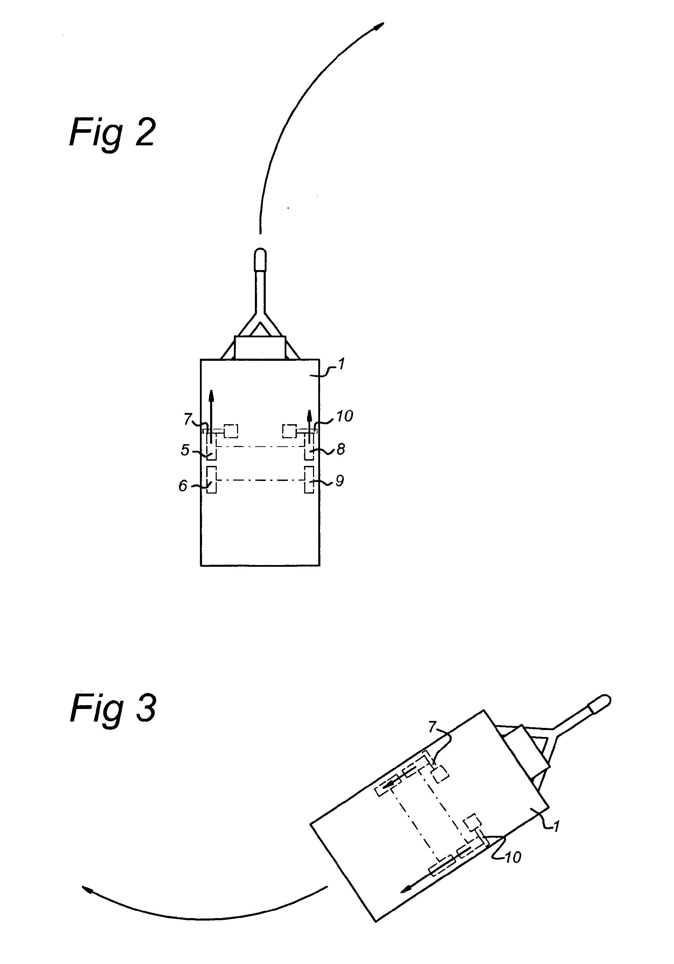

In one embodiment the remote control 24 has at least one button with which a user can make the control unit 22 carry out the manoeuvring movements automatically. The manoeuvring movements will be described below with reference to Figures 2 to 6 inclusive.

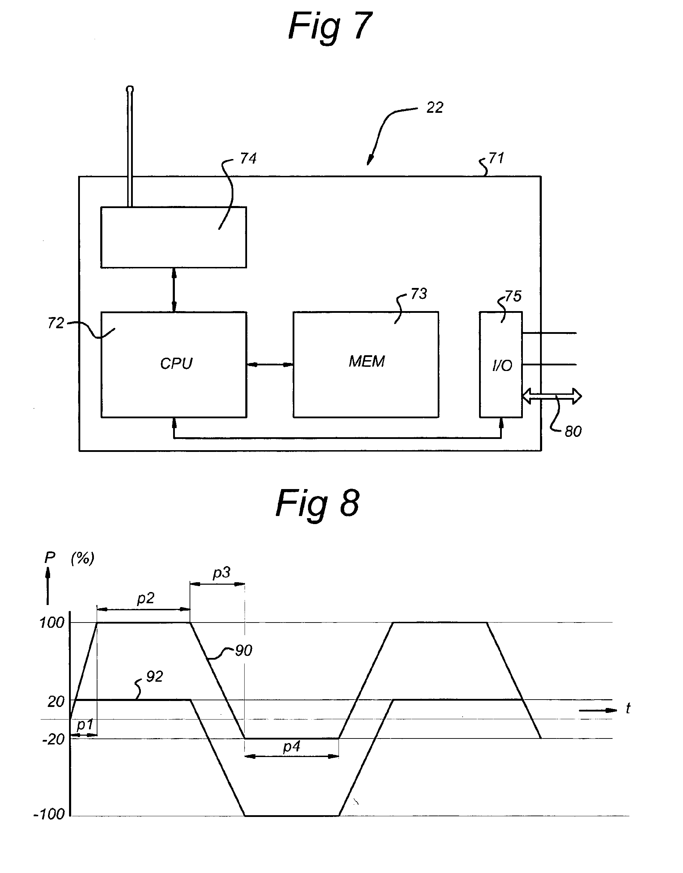

Figure 2 shows an example of a movement of the caravan 1 during a first manoeuvring movement. Figure 2 shows, in a diagrammatic plan view of the caravan 1, the wheels 5 and 6 on the left-hand side of the caravan 1. In Figure 2 the two wheels on the right-hand side of the caravan 1 are indicated by reference numerals 8 and 9. In this example wheel 5 is driven by drive unit 7 and the wheel 8 is driven by a second drive unit 10. It should be noted that other configurations are possible wherein the two drive units 7, 10 are installed behind the wheels 5, 8 or wherein the drive units 7, 10 drive the rear wheels 6, 9. It is also possible for four drive units to be used, wherein the drive units are controlled in pairs, the wheels 5 and 6, like the wheels 8 and 9, being driven in the same way. During the first turn, the drive units 7, 10 are controlled in such a way that the wheel 5 is given a greater speed than the wheel 8. This will cause the caravan 1 to make a right turn (viewed from above). The radius of the turn is preferably between 8 and 16 metres, the axles of the caravan 1 being approximately 1 metre from each other. When such a turn is made torsion will be produced in the tyres of the wheels 5, 6, 8, 9. At the end of the first turn the drive units 7, 10 are controlled in such a way that the wheels 5, 8 come to a halt. As a result of this the rear wheels 6, 9 will also come to a halt. According to the invention a second turn is then made straight away. The power curves of the drive units 7, 10 are in this case, in one embodiment of the invention, such that the power of the drive unit 10 changes sign before the power of the drive unit 7. The wheel 8 will therefore experience a direction-changing force before the wheel 5. As a result of this, the caravan 1 continuously experiences a moment. The various aspects will be described in greater detail with reference to Figures 8 - 10.

In Figure 3, the caravan 1 is shown after it has made the first turn. The drive units 7, 10 are now controlled in such a way that the wheels 5, 8 are driven in a direction opposing that in the first manoeuvring movement, the wheel 5 being given a lower speed than the wheel 8. This will cause the caravan 1 to make a backward turn to the left (viewed from above). The radius of the second turn is preferably the same as the radius of the first turn, though said radii may also be different.

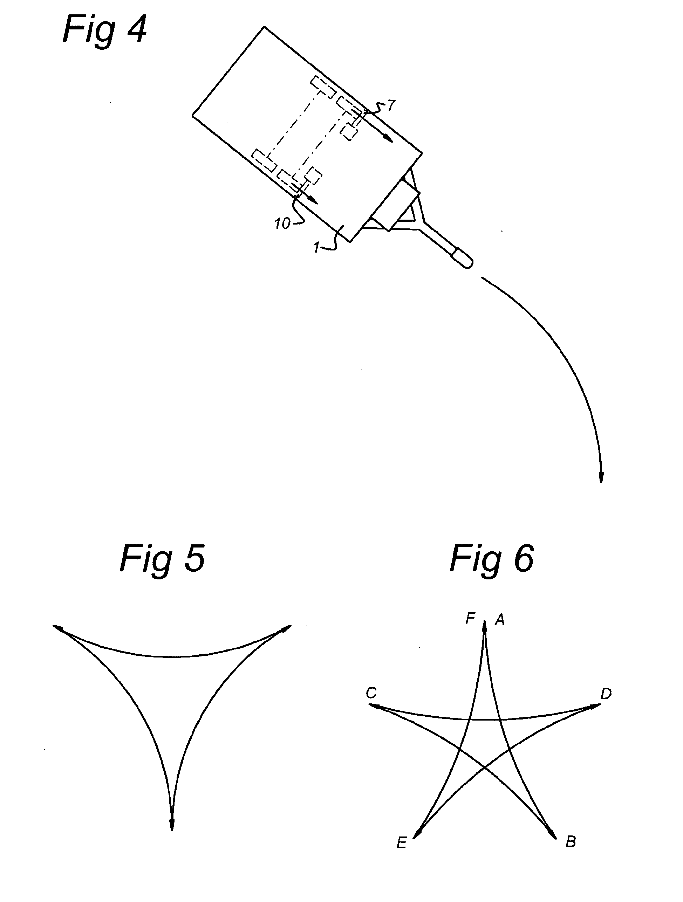

Figure 4 shows a possible third manoeuvring movement, wherein the drive units 7, 10 are controlled in such a way that the wheel 5 is given a greater speed than the wheel 8. This will again cause the caravan 1 to make a right turn (viewed from above). The radius of the third turn may vary from that of the first and second turns.

Figure 5 shows a trajectory of the caravan 1 in one embodiment wherein three turns having the same radius are automatically made in immediate succession. This radius is such that after three manoeuvring movements the caravan 1 is rotated through approximately 180°. The arrangement according to the invention ensures that the caravan 1 can be rotated completely without the torsion produced in the tyres of the wheels being able to relax. Oscillation of the caravan 1 is thus prevented. This is the direct consequence of the fact that the caravan 1 actually rotates continuously in the same direction about an imaginary vertical axis running through the centre of the caravan 1, a moment being exerted continuously on the caravan 1. During the movements of Figures 2-4, the caravan 1 rotates clockwise about this imaginary axis, if the caravan 1 is viewed from above. Only once the caravan 1 has been brought to a complete standstill after the final turn will torsion in the tyres be able to produce any oscillation of the caravan 1, depending on the radius of curvature of the final turn. If the torsion in the tyres is not too high, there will not be any oscillation at all and the torsion will gradually disappear when the caravan 1 is moved forward again in a substantially straight line.

Figure 6 shows a trajectory of the caravan 1 wherein the turns have a greater radius. The ratio between the length of the turns and the radius of the turns is in this case chosen in such a way that after five manoeuvring movements A-B, B-C, C-D and E-F (see Figure 6) the caravan 1 is rotated through 180°. This trajectory is preferred over that of Figure 5 if the mechanical tension on the tyres has to remain limited. It will be clear to a person skilled in the art that other trajectories are possible for rotating the caravan through 180°. It will also be clear that the method according to the invention can also be used in order, for example, to make the caravan 1 rotate automatically through 90°.

Figure 7 shows diagrammatically the components of the control unit 21 according to one embodiment of the invention. The control unit 22 comprises a housing 71 containing, *inter alia,* a processor 72, a memory 73, a receiver unit 74 and an I/O module 75. The processor 72 is arranged to generate, on the basis of instructions and data that are stored in the memory 73, implementation signals that are sent via the I/O module to the drive units 7, 10. These signals can, for example, be indicative of the amount of power with which the various drive units 7, 10 are operated. The processor 72 receives commands from the remote control 24 via the receiver unit 74 (see Figure 1). A user may, for example, press and hold down a button, or combination of buttons, which causes signals to be sent to the receiver unit 74. As long as the processor 72 receives commands which indicate that the caravan 1 has to be rotated further, the processor 72 will continue a specific manoeuvring procedure. As soon as the user releases the buttons, the manoeuvring movements of the caravan 1 will stop. This method prevents a manoeuvring procedure from causing accidents. The user can discontinue the procedure at any time by releasing the buttons.

The control unit 22 is preferably arranged to register which portion of the manoeuvring movements has already been completed at the point when the user brings the caravan 1 to a definitive halt, for example during an emergency stop. The caravan 1 is thus able, once the button(s) has/have been depressed again, to continue its manoeuvring movements as previously intended by the user.

Depending on specific settings which can be preprogrammed in the control unit 22 or in the remote control 24, the processor 72 will send to the drive units 7, 10 signals ensuring that two or more of the manoeuvring movements described above are carried out. The control unit 22 has a special data I/O port 80 to which an external computer (not shown) can be connected. In this way the control unit 22 can be updated with new software. The processor 72 can be implemented as a stand-alone system or as a number of processors operating in parallel, each of which is arranged to carry out sub-tasks of a larger program, or as one or more main processors with various sub-processors. Parts of the functionality can even, if desired, be carried out by remote processors that communicate with processor 72. An example of this is when part of the functionality is located in the remote control 24 and part in the control unit 22. The processor 72 is preferably arranged in such a way that the remote control 24 does not have to be adapted when newly developed commands are added. It is, for example, possible for the user to press two buttons already provided on the remote control 24 in order to carry out a command such as, for example, the manoeuvring movements according to the invention.

Figure 8 shows a graph of a possible control for the drive units 7, 10. In this respect it should be noted that in this case the drive units 7, 10 each have a drive roller which is or becomes pressed onto the tyres of the wheels. Furthermore, the drive units 7, 10 each have an electric motor that is arranged to make the drive roller rotate. At time t = 0, the motors of the drive units 7, 10 are at rest. The power P of the drive unit 7 will then increase to a maximum value. This maximum value is represented in Figure 8 by the value 100 %. The line 90 in the graph shows the course of the power that the drive unit 7 receives according to one embodiment of the invention. The power for the drive units 7, 10 is supplied by, for example, a battery that is installed in the caravan 1. The power of the other drive unit 10 increases less in this embodiment ― to a value of 20 % (see line 92 which represents the course of the power of the second drive unit 10). The start-up period is followed by a second period wherein both powers, line 90 and line 92, remain constant. In a third period both powers decrease and change sign. That is to say the drive units 7, 10 push the wheels 5, 8 in another direction. According to the invention the power curve of the first drive unit 7 continually has a greater value than the power curve of the second drive unit 10. In Figure 8 the line 90 is continuously above the line 92. The start and stop periods constitute an exception. Here both power curves have an identical course.

As a result of this control of the drive units 7, 10, the wheels 5, 8 will accelerate and eventually be given a constant speed, the wheel 5 continually having a greater speed than the wheel 8. The power that is applied to the (left-hand) wheel 5 is, in this embodiment, five times greater than the power that is applied to the (right-hand) wheel 8. The result of this is a turn as drawn in Figure 2.

The power curves in Figure 8 also show that in a fourth period the power of the drive unit 7 has a value of -20 % and the power of the drive unit 10 a value of-100 %. At some point in the second half of the third period the caravan 1 starts to make a backward turn. The precise time cannot be indicated here and depends on the mass of the caravan 1 and on the deceleration of the caravan in the first turn. Because during the fourth period the absolute value of the power of the drive unit 10 (see line 92) is greater than that of drive unit 7, the caravan 1 will make a left turn (see Figure 3). In a fifth period both power curves rise from a negative value to a positive value, the absolute value of the power of drive unit 7 again becoming greater than that of the drive unit 10. During a sixth period the powers remain constant (see lines 90, 92 in Figure 8). At some point in the second half of the fifth period the caravan 1 starts to make a forward turn to the right (see also Figure 4).

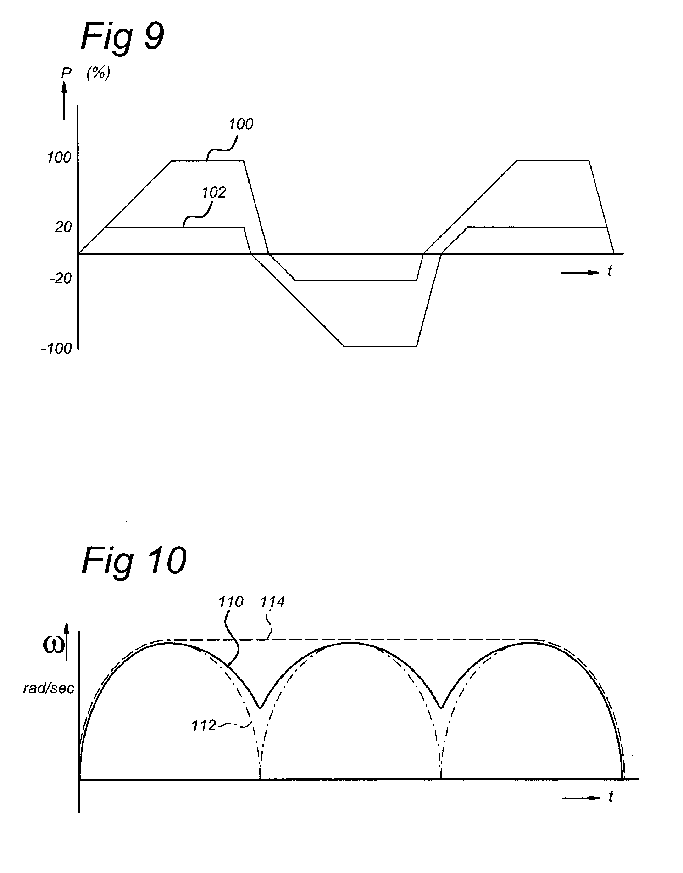

Figure 9 shows an alternative embodiment of the power curves. Line 100 represents the power of drive unit 7 and line 102 represents the power of drive unit 10. Line 100 is at all times above the line 102, except during an initial and final period. In this case, too, it can be seen that the line 100 passes through zero later than line 102. As a result of the fact that the first power curve continually has a greater value than that of the second power curve, a continuous moment is exerted on the caravan 1. The torsion in the tyres is accordingly not given the opportunity to relax completely during manoeuvring since there is always a specific moment on the trailer. This moment is present even at the point when the caravan 1 changes its lateral direction. The elastic deformation (i.e. the torsion) will therefore not be given the opportunity to relax in this case too. Because the torsion in the tyres is not given the opportunity to relax, the speed of rotation of the trailer does not change sign, in other words the caravan 1 will not start to oscillate.

In the embodiment in Figure 9 the power P of the two drive units 7, 10 decreases more rapidly than it increases. This is apparent in Figure 9 from the fact that the curves 100, 102 have a steeper gradient in the periods in which the absolute value of P decreases. The power of the drive units preferably decreases 3 times more rapidly than it increases. This ensures gradual starting and gradual and efficient braking of the caravan 1.

It should be noted that the gradients of the power curves can also be infinitely steep. In that case the power curves are block-shaped, the one block shape running continuously under the other block shape. The first zero pass of the lower block shape will in this case occur before that of the upper block shape. The eventual second zero pass of the lower block shape will in this case occur after that of the upper block shape.

In Figure 10 a line 110 represents an example of the speed of rotation of the caravan 1. In Figure 10 a line 112 represents a curve for the rotational speed wherein the caravan 1 is not quite oscillating, i.e. the speed of rotation touches the X-axis but does not change sign. Preferably, however, the speed of rotation of the caravan 1 is greater than zero at the point when the lateral speed is zero. An ideal line is illustrated by the broken line 114. This line 114 is ideal because in this case the drive units 7, 10 require less power in order to make the caravan rotate.

The speed of the wheels 5, 6, 8, 9 will be dependent on the pressure in the tyres, the pressure of the drive roller on the tyres, the mass of the caravan 1, the number of tyres, the number of drive units and the ground.

In one embodiment the arrangement has a third and a fourth drive unit which can be mounted on a third and a fourth wheel, respectively, of the trailer, wherein the third drive unit is identical to and is controlled in the same manner as the first drive unit and the fourth drive unit is identical to and is controlled in the same manner as the second drive unit.

The method described above will ensure that the caravan 1 is automatically rotated in a desired direction by just a single press on the button on the remote control. With this procedure, preferably as little space as possible is used. An average radius of curvature of a turn to be made by the trailer is preferably between 8 and 16 metres. The word "average" is used in this case because the radius of curvature during a turn is not always constant. This depends on the shapes of the power curves.

In one embodiment of the method the trailer rotates in such a way that once 1 metre has been covered the trailer has been rotated through at least 15 degrees.

It should be noted that the start-up period as mentioned above is shorter than the period that is required for the first power curve to reach a first maximum or else minimum. The stop period does not begin until after the first power curve has reached the final maximum or else minimum.

It will be understood that on reading the foregoing variants will be immediately apparent to a person skilled in the art. It is, for example, possible for the two power curves to intersect the time axis at the same time. All that matters is that the polarity of the powers of the drive units is immediately reversed when the direction of the trailer is reversed so that a force is exerted on the wheels at all times. Furthermore, instead of driving the front wheels, the rear wheels can be driven. It is also conceivable for the radius of curvature to vary from turn to turn, i.e., for example, first a sharp right turn, then a gentle backward turn to the left and then a gentle forward turn to the right. Such variants are deemed to fall within the scope of the accompanying claims.

## Claims

1. Arrangement for manoeuvring a trailer with two wheels on either side, which arrangement comprises a first and a second drive unit which can be mounted on the trailer and which are arranged to drive one wheel on one side respectively, of the trailer, the arrangement including a control unit which is arranged to control the first and the second drive unit, **characterised in that** the control unit is arranged for controlling the drive units in such a way that the trailer makes a forward/backward turn, automatically followed by a backward/forward turn, the power (P) of the first drive unit being described by a first power curve and the power of the second drive unit by a second power curve, each power curve intersecting a time axis at least once, which intersection denotes a change in driving direction of the drive units concerned, and both power curves having a positive and a negative value alternating over time, wherein the power curve of the first drive unit is continuously above the power curve of the second drive unit and the power curve of the second drive unit changes sign before the power curve of the first drive unit.

2. Arrangement according to Claim 1, wherein after a start-up period and before a stop period the first power curve continually has a greater value than that of the second power curve.

3. Arrangement according to Claim 1 or 2, wherein the first and the second power curve vary between the values P_max and P_min, wherein P_max > 0 and P_min < 0 and |P_max|> |P_min|.

4. Arrangement according to Claim 3, wherein the second power curve at the point when the first power curve passes through zero has as an absolute value, which is at least 10 % of the maximum value of the power curves.

5. Arrangement according to Claim 3, wherein the first power curve moves in a first period from 0 to the value P_max, remains in a second period at the value P_max, moves in a third period from the value P_max to a value P_min and remains in a fourth period at the value P_min.

6. Arrangement according to Claim 5, wherein |P_max| / |P_min| = 5.

7. Arrangement according to one of the preceding claims, wherein after a start-up period and before a stop period the second power curve remains at a constant value below the first power curve.

8. Arrangement according to one of the preceding claims, including a third and a fourth drive unit which can be mounted on a third and a fourth wheel, respectively, of the trailer, wherein the third drive unit is identical to and is controlled in the same manner as the first drive unit and the fourth drive unit is identical to and is controlled in the same manner as the second drive unit.

9. Trailer provided with an arrangement according to one of the preceding claims.

10. Method for manoeuvring a trailer with two wheels on either side, comprising:
- driving, on both sides of the trailer, of at least one wheel by means of a first and a second drive unit;
- controlling the first and the second drive unit in such a way that the trailer makes a forward/backward turn, automatically followed by a backward/forward turn, the power (P) of the first drive unit being described by a first power curve and the power of the second drive unit by a second power curve, each power curve intersecting a time axis at least once, which intersection denotes a change in driving direction of the drive units concerned, and both power curves having a positive and a negative value alternating over time, wherein the power curve of the first drive unit is continuously above the power curve of the second drive unit and the power curve of the second drive unit changes sign before the power curve of the first drive unit.

11. Method according to Claim 10, wherein the trailer makes a sufficient number of successive turns for the trailer to be rotated through approximately 180 deg..

12. Method according to Claims 10 to 11, wherein an average radius of curvature of a turn to be made by the trailer is between 8 and 16 metres.

13. Method according to Claims 10 to 12, wherein once 1 metre has been covered the trailer has been rotated through at least 15 degrees.

14. Computer program which, when loaded on a processor of a control unit for controlling at least a first and a second drive unit of an arrangement for manoeuvring a trailer with two wheels on either side, allows the control unit to control the drive units in such a way that the trailer makes a forward/backward turn and then immediately makes a backward/forward turn, the power (P) of the first drive unit being described by a first power curve and the power of the second drive unit by a second power curve, each power curve intersecting a time axis at least once, which intersection denotes a change in driving direction of the drive units concerned, and both power curves having a positive and a negative value alternating over time, wherein the power curve of the first drive unit is continuously above the power curve of the second drive unit and the power curve of the second drive unit changes sign before the power curve of the first drive unit.

## Patentansprüche

1. Anordnung zum Rangieren eines Anhängers mit zwei Rädern auf jeder Seite, wobei die Anordnung eine erste und eine zweite Antriebseinheit aufweist, die an dem Anhänger montiert werden können und die eingerichtet sind, um ein Rad jeweils auf einer Seite des Anhängers anzutreiben, die Anordnung eine Steuereinheit umfasst, die eingerichtet ist, um die erste und die zweite Antriebseinheit zu steuern, **dadurch gekennzeichnet, dass** die Steuereinheit zum Steuern der Antriebseinheiten eingerichtet ist, derart, dass der Anhänger eine Vorwärts-/Rückwärts-drehung macht, der sich automatisch eine Rückwärts-/Vorwärtsdrehung anschließt, die Leistung (P) der ersten Antriebseinheit durch eine erste Leistungskurve und die Leistung der zweiten Antriebseinheit durch eine zweite Leistungskurve beschrieben wird, jede Leistungskurve eine Zeitachse mindestens einmal schneidet, wobei der Schnittpunkt eine Änderung in Antriebsrichtung der betroffenen Antriebseinheiten bedeutet und beide Leistungskurven einen positiven und einen negativen Wert aufweisen, die sich über die Zeit alternieren, wobei die Leistungskurve der ersten Antriebseinheit über der Leistungskurve der zweiten Antriebseinheit stetig ist, und die Leistungskurve der zweiten Antriebseinheit das Vorzeichen vor der Leistungskurve der ersten Antriebseinheit ändert.

2. Anordnung nach Anspruch 1, bei der nach einer Anfahrperiode und vor einer Stillstandsperiode die erste Leistungskurve immer wieder einen größeren Wert als den der zweiten Leistungskurve aufweist.

3. Anordnung nach Anspruch 1 oder 2, bei der die erste und die zweite Leistungskurve zwischen den Werten P_max und P_min variieren, wobei P_max > 0 und P_min < 0 und |*P*_max| > |*P*_min| ist.

4. Anordnung nach Anspruch 3, bei der die zweite Leistungskurve an dem Punkt, bei dem die erste Leistungskurve durch Null verläuft, einen absoluten Wert besitzt, der mindestens 10% des maximalen Wertes der Leistungskurven ist.

5. Anordnung nach Anspruch 3, bei der sich die erste Leistungskurve in einer ersten Periode von 0 zu dem Wert P_max bewegt, in einer zweiten Periode auf dem Wert P_max bleibt, in einer dritten Periode von dem Wert P_max zu einem Wert P_min bewegt und in einer vierten Periode auf dem Wert P_min bleibt.

6. Anordnung nach Anspruch 5, bei der |*P*_max / |*P*_min| = 5 ist.

7. Anordnung nach einem der vorhergehenden Ansprüche, bei der nach einer Anfahrperiode und vor einer Stillstandsperiode die zweite Leistungskurve auf einem konstanten Wert unter der ersten Leistungskurve bleibt.

8. Anordnung nach einem der vorhergehenden Ansprüche, umfassend eine dritte und eine vierte Antriebseinheit, die auf einem dritten bzw. einem vierten Rad des Anhängers montiert werden können, wobei die dritte Antriebseinheit mit der ersten Antriebseinheit identisch ist und in der gleichen Weise wie diese gesteuert wird, und die vierte Antriebseinheit mit der zweiten Antriebseinheit identisch ist und in der gleichen Weise wie diese gesteuert wird.

9. Anhänger, der mit einer Anordnung nach einem der vorhergehenden Ansprüche versehen ist.

10. Verfahren zum Rangieren eines Anhängers mit zwei Rädern auf jeder Seite, umfassend:
- Antreiben, auf beiden Seiten des Anhängers, von mindestens einem Rad durch eine erste und eine zweite Antriebseinheit;
- Steuern der ersten und der zweiten Antriebseinheit derart, dass der Anhänger eine Vorwärts-/Rückwärtsdrehung macht, der sich automatisch eine Rückwärts-/Vorwärtsdrehung anschließt, wobei die Leistung (P) der ersten Antriebseinheit durch eine erste Leistungskurve und die Leistung der zweiten Antriebseinheit durch eine zweite Leistungskurve beschrieben wird, jede Leistungskurve mindestens einmal eine Zeitachse schneidet, wobei der Schnittpunkt eine Änderung in Antriebsrichtung der betroffenen Antriebseinheiten bedeutet und beide Leistungskurven einen positiven und einen negativen Wert besitzen, die sich über die Zeit alternieren, wobei die Leistungskurve der ersten Antriebseinheit über der Leistungskurve der zweiten Antriebseinheit stetig ist, und die Leistungskurve der zweiten Antriebseinheit das Vorzeichen vor der Leistungskurve der ersten Antriebseinheit ändert.

11. Verfahren nach Anspruch 10, bei dem der Anhänger eine genügende Anzahl von aufeinander folgenden Drehungen macht, damit der Anhänger um ungefähr 180 Grad gedreht wird.

12. Verfahren nach den Ansprüchen 10 bis 11, bei dem ein mittlerer Bogenhalbmesser einer von dem Anhänger durchzuführenden Drehung zwischen 8 und 16 Meter beträgt.

13. Verfahren nach den Ansprüchen 10 bis 12, bei dem der Anhänger um mindestens 15 Grad gedreht worden ist, sobald 1 Meter zurückgelegt wurde.

14. Computerprogramm, das beim Einlesen auf einem Prozessor einer Steuereinheit zum Steuern zumindest einer ersten und einer zweiten Antriebseinheit einer Anordnung zum Rangieren eines Anhängers mit zwei Rädern auf jeder Seite der Steuereinheit erlaubt, die Antriebseinheiten zu steuern, derart, dass der Anhänger eine Vorwärts-/ Rückwärtsdrehung und dann unmittelbar eine Rückwärts-/ Vorwärtsdrehung macht, wobei die Leistung (P) der ersten Antriebseinheit durch eine erste Leistungskurve und die Leistung der zweiten Antriebseinheit durch eine zweite Leistungskurve beschrieben wird, jede Leistungskurve mindestens einmal eine Zeitachse schneidet, wobei der Schnittpunkt eine Änderung in Antriebsrichtung der betroffenen Antriebseinheiten bedeutet und beide Leistungskurven einen positiven und einen negativen Wert besitzen, die sich über die Zeit alternieren, wobei die Leistungskurve der ersten Antriebseinheit über der Leistungskurve der zweiten Antriebseinheit stetig ist, und die Leistungskurve der zweiten Antriebseinheit das Vorzeichen vor der Leistungskurve der ersten Antriebseinheit ändert.

## Revendications

1. Dispositif de manoeuvre d'une remorque avec deux roues de chaque côté, lequel dispositif comprend une première et une seconde unités d'entraînement qui peuvent être montées sur la remorque et qui sont conçues pour entraîner une roue sur un côté respectivement, de la remorque, le dispositif comprenant une unité de commande qui est conçue pour commander les première et seconde unités d'entraînement, **caractérisé en ce que** l'unité de commande est conçue pour commander les unités d'entraînement de telle manière que la remorque effectue un virage vers l'avant/vers l'arrière, suivi automatiquement par un virage vers l'arrière/vers l'avant, la puissance (P) de la première unité d'entraînement étant décrite par une première courbe de puissance et la puissance de la deuxième unité d'entraînement par une seconde courbe de puissance, chaque courbe de puissance formant une intersection avec un axe des temps au moins une fois, ladite intersection indiquant un changement de la direction d'entraînement des unités d'entraînement concernées, et les deux courbes de puissance ayant une valeur positive et une valeur négative alternant au fil du temps, dans lequel la courbe de puissance de la première unité d'entraînement est en continu au-dessus de la courbe de puissance de la deuxième unité d'entraînement et la courbe de puissance de la deuxième unité d'entraînement change de signe avant la courbe de puissance de la première unité d'entraînement.

2. Dispositif selon la revendication 1, dans lequel après une période de démarrage et avant une période d'arrêt, la première courbe de puissance présente en continu une valeur supérieure à celle de la seconde courbe de puissance.

3. Dispositif selon la revendication 1 ou 2, dans lequel la première et la seconde courbe de puissance varie entre les valeurs P_max et P_min, où P_max > 0 et P_min < 0 et |P_max| > |P_min|.

4. Dispositif selon la revendication 3, dans lequel la seconde courbe de puissance au moment où la première courbe de puissance passe par zéro a une valeur absolue, qui représente au moins 10 % de la valeur maximale des courbes de puissance.

5. Dispositif selon la revendication 3, dans lequel la première courbe de puissance se déplace dans une première période de 0 à la valeur P_max, reste dans une deuxième période à la valeur P_max, passe dans une troisième période de la valeur P_max à une valeur P_min et reste dans une quatrième période à la valeur P_min.

6. Dispositif selon la revendication 5, dans lequel |P_max| / |P_min| = 5.

7. Dispositif selon l'une des revendications précédentes, dans lequel après une période de démarrage et avant une période d'arrêt, la seconde courbe de puissance reste à une valeur constante en dessous de la première courbe de puissance.

8. Dispositif selon l'une des revendications précédentes, comprenant une troisième et une quatrième unités d'entraînement qui peuvent être montées sur une troisième et une quatrième roues, respectivement, de la remorque, la troisième unité d'entraînement étant identique à et étant commandée de la même manière que la première unité d'entraînement et la quatrième unité d'entraînement étant identique à et étant commandée de la même manière que la deuxième unité d'entraînement.

9. Remorque dotée d'un dispositif selon l'une des revendications précédentes.

10. Procédé de manoeuvre d'une remorque avec deux roues de chaque côté, comprenant :
- l'entraînement, sur les deux côtés de la remorque, d'au moins une roue au moyen d'une première et d'une deuxième unité d'entraînement ;
- la commande de la première et de la deuxième unité d'entraînement de telle manière que la remorque effectue un virage vers l'avant/vers l'arrière, suivi automatiquement par un virage vers l'arrière/vers l'avant, la puissance (P) de la première unité d'entraînement étant décrite par une première courbe de puissance et la puissance de la deuxième unité d'entraînement par une seconde courbe de puissance, chaque courbe de puissance formant une intersection avec un axe des temps au moins une fois, ladite intersection indiquant un changement de la direction d'entraînement des unités d'entraînement concernées et les deux courbes de puissance ayant une valeur positive et une valeur négative alternant au fil du temps, dans lequel la courbe de puissance de la première unité d'entraînement est en continu au-dessus de la courbe de puissance de la deuxième unité d'entraînement et la courbe de puissance de la deuxième unité d'entraînement change de signe avant la courbe de puissance de la première unité d'entraînement.

11. Procédé selon la revendication 10, dans lequel la remorque effectue un nombre suffisant de virages successifs pour que la remorque puisse tourner d'approximativement 180°.

12. Procédé selon les revendications 10 à 11, dans lequel un rayon moyen de courbure d'un virage devant être effectué par la remorque est compris entre 8 et 16 mètres.

13. Procédé selon les revendications 10 à 12, dans lequel une fois qu'1 mètre a été couvert, la remorque a tourné d'au moins 15 degrés.

14. Programme informatique qui, lorsqu'il est chargé sur un processeur d'une unité de commande pour commander au moins une première et une deuxième unités d'entraînement d'un dispositif de manoeuvre d'une remorque avec deux roues de chaque côté, permet à l'unité de commande de commander les unités d'entraînement de telle manière que la remorque effectue un virage vers l'avant/vers l'arrière et immédiatement ensuite un virage vers l'arrière/vers l'avant, la puissance (P) de la première unité d'entraînement étant décrite par une première courbe de puissance et la puissance de la deuxième unité d'entraînement par une seconde courbe de puissance, chaque courbe de puissance formant une intersection avec un axe des temps au moins une fois, ladite intersection indiquant un changement de la direction d'entraînement des unités d'entraînement concernées et les deux courbes de puissance ayant une valeur positive et une valeur négative alternant au fil du temps, dans lequel la courbe de puissance de la première unité d'entraînement est en continu au-dessus de la courbe de puissance de la deuxième unité d'entraînement et la courbe de puissance de la deuxième unité d'entraînement change de signe avant la courbe de puissance de la première unité d'entraînement.
